# EUROPEAN PATENT APPLICATION

(11) **EP 4 686 167 A1**
(43) Date of publication of application: **28.01.2026**
(21) Application number: 24814169.9
(22) Date of filing: 14.05.2024
(51) Int. Cl.: H04L 47/2425

(54) **COMMUNICATION METHOD AND COMMUNICATION APPARATUS**

(30) Priority: 02.06.2023 CN 202310654974
(71) Applicant: HUAWEI TECHNOLOGIES CO., LTD., Shenzhen 518129 (CN)
(72) Inventor: HU, Xiang, Shenzhen, Guangdong 518129 (CN)
(74) Representative: Goddar, Heinz J.
(86) International application number: PCT/CN2024/093171
(87) International publication number: WO 2024/244969

(57) **Abstract**

Embodiments of this application provide a communication method and a communication apparatus. According to this application, a data analysis network element may obtain a correspondence between a plurality of bit rates and a plurality of pieces of service level agreement SLA information; determine, based on a target bit rate of a first service, target SLA information corresponding to the first service; and send the target SLA information to a first network element. The first network element determines a policy for increasing a current bit rate of the first service to the target bit rate. According to the method, the bit rate of the first service can be quickly increased, thereby improving resource utilization.

## Description

This application claims priority to Chinese Patent Application No. 202310654974.0, filed with the China National Intellectual Property Administration on June 02, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

During play of a video source, by using an adaptive bit rate streaming (adaptive bit rate streaming, ABS) technology, quality of a video stream may be adjusted based on a first packet latency, round trip time, a packet loss rate, a retransmission rate, an out-of-order rate, a latency jitter, a user bandwidth, and memory usage, and the like that are monitored in real time. Therefore, a player client needs to use an encoder to encode a single video source into video streams with a plurality of bit rates. Therefore, the player client performs switching between video streams with different bit rates based on the ABS technology. When the player client starts to play the video source, the player client first requests a video stream with a default bit rate or a video stream with a bit rate recorded during historical access. If the player client determines that a current network condition is better (for example, a latency is low or a bandwidth is large), a quantity of currently buffered data is large, currently available resources are sufficient, or the like, the player requests a video stream with a higher bit rate. If the player determines that the current network condition is worse (for example, the latency is high or the bandwidth is small), the quantity of currently buffered data is small, the currently available resources are insufficient, or the like, the player requests a video stream with a lower bit rate.

For many newly deployed networks, how to quickly fill a pipeline and implement traffic stimulation to improve resource utilization is what operators pursue. Currently, there is no technical solution to effectively implement traffic stimulation.

### SUMMARY

Embodiments of this application provide a communication method and a communication apparatus, to quickly increase a bit rate of a service, thereby improving resource utilization.

According to a first aspect, a communication method is provided. The method may be performed by a data analysis network element, or may be performed by a component (for example, a chip or a circuit) of the data analysis network element. This is not limited herein. For ease of description, the following provides descriptions by using an example in which the method is performed by the data analysis network element.

The method includes: The data analysis network element obtains a first mapping relationship, where the first mapping relationship indicates a correspondence between a plurality of bit rates and a plurality of pieces of service level agreement SLA information; the data analysis network element determines, based on a target bit rate of a first service, target SLA information corresponding to the target bit rate from the first mapping relationship, where the target bit rate of the first service is greater than a current bit rate of the first service; and the data analysis network element sends first information, where the first information indicates the target SLA information.

Specifically, the first service belongs to a plurality of services.

Specifically, the first information may indicate the target SLA information in the following manner: The first information may include the target SLA information, or the first information may include a difference between the target SLA information and current SLA information.

According to the method, the data analysis network element notifies a first network element of the target SLA information obtained through analysis, so that the first network element determines a policy for increasing the current bit rate of the first service to the target bit rate, to quickly increase the bit rate of the first service, thereby improving resource utilization.

Specifically, the target SLA information includes at least one of the following information:
an average latency of transmission of the first service, a peak latency of transmission of the first service, a latency jitter of transmission of the first service, a first packet response latency of transmission of the first service, an average transmission bandwidth of the first service, a peak transmission bandwidth of the first service, a 5G quality of service identifier 5QI of the first service, a quality of service class identifier QCI of the first service, a priority of a service data flow SDF of the first service, a guaranteed bit rate GBR of the SDF of the first service, a maximum bit rate MBR of the SDF of the first service, a packet error loss rate PELR of the first service, and the like.

With reference to the first aspect, in some implementations of the first aspect, the first mapping relationship further indicates a correspondence between the plurality of bit rates, and a plurality of key performance indicators KPIs and the plurality of pieces of SLA information.

Specifically, the KPI includes at least one of the following information:
a first packet latency, round trip time RTT, a packet loss rate, a retransmission rate, an out-of-order rate, a latency jitter, and the like. With reference to the first aspect, in some implementations of the first aspect, the first mapping relationship further indicates a correspondence between the plurality of bit rates, and the plurality of key performance indicators KPIs, a plurality of key quality indicators KQIs, and the plurality of pieces of SLA information.

Specifically, the KQI includes at least one of the following information:
a resolution, a frame rate, a buffer latency, a quantity of short video headers, a hypertext transfer protocol HTTP response latency, a freezing ratio, and the like.

Specifically, the data analysis network element may obtain the first mapping relationship in the following manner: The data analysis network element receives a plurality of pieces of service access information of a plurality of services, where each of the plurality of pieces of service access information includes at least one of SLA information, a KPI, and a KQI of a service, and the plurality of services and the plurality of pieces of service access information are in one-to-one correspondence; and the data analysis network element determines the first mapping relationship based on the plurality of pieces of service access information, where each of the plurality of bit rates is determined based on the KPI.

Alternatively, the data analysis network element may obtain the first mapping relationship in the following manner: The data analysis network element receives a plurality of pieces of service access information of a plurality of services, where each of the plurality of pieces of service access information includes at least one of a bit rate, SLA information, a KPI, and a KQI of a service, and the plurality of services and the plurality of pieces of service access information are in one-to-one correspondence; and the data analysis network element determines the first mapping relationship based on the plurality of pieces of service access information.

Specifically, each of the plurality of services may be a category service, for example, a short video or an on-demand video; or each of the plurality of services may be a subcategory service of a category service, for example, a TikTok short video, a TikTok live broadcast, a Tencent conference, or a cloud game.

According to the method, the data analysis network element may perform analysis and inference based on more indicators, to provide target SLA information that is more accurate.

With reference to the first aspect, in some implementations of the first aspect, that the data analysis network element sends the first information includes: The data analysis network element receives second information, where the second information includes a first event identifier, and the first event identifier identifies a bit rate increase event of the first service; and the data analysis network element sends the first information to a first network element based on the second information, where the first information is for determining, by the first network element, a first policy for increasing the current bit rate of the first service to the target bit rate.

Specifically, the second information may be a subscription message or a query message. This is not limited in this application.

Specifically, the first information may be a notification message or a query feedback message. This is not limited in this application.

Specifically, the second information may further include an identifier of a first terminal device, an identifier of the first service, and the like, and the first service belongs to the first terminal device.

According to the method, the first network element may obtain the target SLA information, and determine, based on the target SLA information, the policy for increasing the current bit rate to the target bit rate, to quickly increase the bit rate of the first service, thereby improving the resource utilization.

With reference to the first aspect, in some implementations of the first aspect, the first information further includes at least one of the following information: the first event identifier, the identifier of the first terminal device, the identifier of the first service, traffic flow template TFT information corresponding to the SDF of the first service, and a second policy, where the second policy is for assisting the first network element in determining the first policy for increasing the current bit rate of the first service to the target bit rate.

Specifically, the first policy may be the same as or different from the second policy. This is not limited in this application.

According to the method, the data analysis network element may provide the first network element with a recommended policy for increasing the bit rate of the first service, to assist the first network element in determining the first policy, thereby improving accuracy of formulating the first policy.

With reference to the first aspect, in some implementations of the first aspect, the first network element may be a policy control function PCF network element, a session management function SMF network element, a user plane function UPF network element, or the like. This is not limited in this application.

According to a second aspect, a communication method is provided. The method may be performed by a first network element, or may be performed by a component (for example, a chip or a circuit) of the first network element. This is not limited herein. For ease of description, the following provides descriptions by using an example in which the method is performed by the first network element.

The method includes: The first network element receives first information, where the first information indicates target SLA information corresponding to a target bit rate of a first service, the target SLA information is determined from a first mapping relationship, and the first mapping relationship indicates a correspondence between a plurality of bit rates and a plurality of pieces of service level agreement SLA information; and the first network element determines a first policy based on the first information, where the first policy is for increasing a current bit rate of the first service to the target bit rate.

Specifically, the first service belongs to a plurality of services.

Specifically, the first information may indicate the target SLA information in the following manner: The first information may include the target SLA information, or the first information may include a difference between the target SLA information and current SLA information.

According to the method, a data analysis network element notifies the first network element of the target SLA information obtained through analysis, so that the first network element determines the policy for increasing the current bit rate of the first service to the target bit rate, to quickly increase the bit rate of the first service, thereby improving resource utilization.

Specifically, the target SLA information includes at least one of the following information:
an average latency of transmission of the first service, a peak latency of transmission of the first service, a latency jitter of transmission of the first service, a first packet response latency of transmission of the first service, an average transmission bandwidth of the first service, a peak transmission bandwidth of the first service, a 5G quality of service identifier 5QI of the first service, a quality of service class identifier QCI of the first service, a priority of a service data flow SDF of the first service, a guaranteed bit rate GBR of the SDF of the first service, a maximum bit rate MBR of the SDF of the first service, a packet error loss rate PELR of the first service, and the like.

With reference to the second aspect, in some implementations of the second aspect, the first mapping relationship further indicates a correspondence between the plurality of bit rates, and a plurality of key performance indicators KPIs and the plurality of pieces of SLA information.

Specifically, the KPI includes at least one of the following information:
a first packet latency, round trip time RTT, a packet loss rate, a retransmission rate, an out-of-order rate, a latency jitter, and the like.

With reference to the second aspect, in some implementations of the second aspect, the first mapping relationship further indicates a correspondence between the plurality of bit rates, and the plurality of key performance indicators KPIs, a plurality of key quality indicators KQIs, and the plurality of pieces of SLA information.

Specifically, the KQI includes at least one of the following information:
a resolution, a frame rate, a buffer latency, a quantity of short video headers, a hypertext transfer protocol HTTP response latency, a freezing ratio, and the like.

Specifically, the first mapping relationship may be obtained by the data analysis network element in the following manner: The data analysis network element receives a plurality of pieces of service access information of a plurality of services, where each of the plurality of pieces of service access information includes at least one of SLA information, a KPI, and a KQI of a service, and the plurality of services and the plurality of pieces of service access information are in one-to-one correspondence; and the data analysis network element determines the first mapping relationship based on the plurality of pieces of service access information, where each of the plurality of bit rates is determined based on the KPI.

Alternatively, the first mapping relationship may be obtained by the data analysis network element in the following manner: The data analysis network element receives a plurality of pieces of service access information of a plurality of services, where each of the plurality of pieces of service access information includes at least one of a bit rate, SLA information, a KPI, and a KQI of a service, and the plurality of services and the plurality of pieces of service access information are in one-to-one correspondence; and the data analysis network element determines the first mapping relationship based on the plurality of pieces of service access information.

Specifically, each of the plurality of services may be a category service, for example, a short video or an on-demand video; or each of the plurality of services may be a subcategory service of a category service, for example, a TikTok short video, a TikTok live broadcast, a Tencent conference, or a cloud game.

According to the method, the data analysis network element may perform analysis and inference based on more indicators, to provide target SLA information that is more accurate.

With reference to the second aspect, in some implementations of the second aspect, that the first network element receives the first information includes: The first network element sends second information, where the second information includes a first event identifier, and the first event identifier identifies a bit rate increase event of the first service; and the first network element receives the first information based on the second information.

Specifically, the second information may be a subscription message or a query message. This is not limited in this application.

Specifically, the first information may be a notification message or a query feedback message. This is not limited in this application.

Specifically, the second information may further include an identifier of a first terminal device, an identifier of the first service, and the like, and the first service belongs to the first terminal device.

According to the method, the first network element may obtain the target SLA information, and determine, based on the target SLA information, the policy for increasing the current bit rate to the target bit rate, to quickly increase the bit rate of the first service, thereby improving the resource utilization.

With reference to the second aspect, in some implementations of the second aspect, the first information further includes at least one of the following information: the first event identifier, the identifier of the first terminal device, the identifier of the first service, traffic flow template TFT information corresponding to the SDF of the first service, and a second policy, where the second policy is for assisting the first network element in determining the first policy for increasing the current bit rate of the first service to the target bit rate.

Specifically, the first policy may be the same as or different from the second policy. This is not limited in this application.

According to the method, the data analysis network element may provide the first network element with a recommended policy for increasing the bit rate of the first service, to assist the first network element in determining the first policy, thereby improving accuracy of formulating the first policy.

With reference to the second aspect, in some implementations of the second aspect, the first network element may be a policy control function PCF network element, a session management function SMF network element, a user plane function UPF network element, or the like. This is not limited in this application.

According to a third aspect, a communication apparatus is provided. The communication apparatus includes: a transceiver unit, configured to obtain a first mapping relationship, where the first mapping relationship indicates a correspondence between a plurality of bit rates and a plurality of pieces of service level agreement SLA information; and a processing unit, configured to determine, based on a target bit rate of a first service, target SLA information corresponding to the target bit rate from the first mapping relationship, where the target bit rate of the first service is greater than a current bit rate of the first service, where the transceiver unit is further configured to send first information, where the first information indicates the target SLA information.

With reference to the third aspect, in some implementations of the third aspect, the first mapping relationship further indicates a correspondence between the plurality of bit rates, a plurality of key performance indicators KPIs, and the plurality of pieces of SLA information.

With reference to the third aspect, in some implementations of the third aspect, the first mapping relationship further indicates a correspondence between the plurality of bit rates, and the plurality of key performance indicators KPIs, a plurality of key quality indicators KQIs, and the plurality of pieces of SLA information.

With reference to the third aspect, in some implementations of the third aspect, that the transceiver unit is further configured to send the first information includes: The transceiver unit is configured to receive second information, where the second information includes a first event identifier, and the first event identifier identifies a bit rate increase event of the first service; and the transceiver unit is configured to send the first information to a first network element based on the second information, where the first information is for determining, by the first network element, a first policy for increasing the current bit rate of the first service to the target bit rate.

With reference to the third aspect, in some implementations of the third aspect, the first information further includes at least one of the following information: the first event identifier, an identifier of a first terminal device, an identifier of the first service, traffic flow template TFT information corresponding to an SDF of the first service, and a second policy, where the second policy is for assisting the first network element in determining the first policy for increasing the current bit rate of the first service to the target bit rate.

With reference to the third aspect, in some implementations of the third aspect, the first network element may be a policy control function PCF network element, a session management function SMF network element, a user plane function UPF network element, or the like. This is not limited in this application.

For explanations of related content and beneficial effect of the communication apparatus provided in the third aspect, refer to the communication method shown in the first aspect. Details are not described herein again.

According to a fourth aspect, a communication apparatus is provided. The communication apparatus includes: a transceiver unit, configured to receive first information, where the first information indicates target SLA information corresponding to a target bit rate of a first service, the target SLA information is determined from a first mapping relationship, and the first mapping relationship indicates a correspondence between a plurality of bit rates and a plurality of pieces of service level agreement SLA information; and a processing unit, configured to determine a first policy based on the first information, where the first policy is for increasing a current bit rate of the first service to the target bit rate.

With reference to the fourth aspect, in some implementations of the fourth aspect, the first mapping relationship further indicates a correspondence between the plurality of bit rates, and a plurality of key performance indicators KPIs and the plurality of pieces of SLA information.

With reference to the fourth aspect, in some implementations of the fourth aspect, the first mapping relationship further indicates a correspondence between the plurality of bit rates, and the plurality of key performance indicators KPIs, a plurality of key quality indicators KQIs, and the plurality of pieces of SLA information.

With reference to the fourth aspect, in some implementations of the fourth aspect, that the transceiver unit is configured to receive the first information includes: The transceiver unit is configured to send second information, where the second information includes a first event identifier, and the first event identifier identifies a bit rate increase event of the first service; and the transceiver unit is configured to receive the first information based on the second information.

With reference to the fourth aspect, in some implementations of the fourth aspect, the first information further includes at least one of the following information: the first event identifier, an identifier of a first terminal device, an identifier of the first service, traffic flow template TFT information corresponding to an SDF of the first service, and a second policy, where the second policy is for assisting the communication apparatus in determining the first policy for increasing the current bit rate of the first service to the target bit rate.

With reference to the fourth aspect, in some implementations of the fourth aspect, the communication apparatus may be a policy control function PCF network element, a session management function SMF network element, a user plane function UPF network element, or the like. This is not limited in this application.

For explanations of related content and beneficial effect of the communication apparatus provided in the fourth aspect, refer to the communication method shown in the first aspect. Details are not described herein again.

According to a fifth aspect, a communication apparatus is provided, including a processor. The processor is coupled to a memory, and may be configured to execute instructions in the memory, to implement the method according to any one of the first aspect and the possible implementations of the first aspect. Optionally, the communication apparatus further includes the memory. Optionally, the communication apparatus further includes a communication interface, and the processor is coupled to the communication interface.

In an implementation, the communication apparatus is a data analysis network element. When the communication apparatus is the data analysis network element, the communication interface may be a transceiver or an input/output interface.

In another implementation, the communication apparatus is a chip arranged in the data analysis network element. When the communication apparatus is the chip arranged in the data analysis network element, the communication interface may be an input/output interface.

Optionally, the transceiver may be a transceiver circuit. Optionally, the input/output interface may be an input/output circuit.

According to a sixth aspect, a communication apparatus is provided, including a processor. The processor is coupled to a memory, and may be configured to execute instructions in the memory, to implement the method according to any one of the second aspect and the possible implementations of the second aspect. Optionally, the communication apparatus further includes the memory. Optionally, the communication apparatus further includes a communication interface, and the processor is coupled to the communication interface.

In an implementation, the communication apparatus is a first network element. When the communication apparatus is the first network element, the communication interface may be a transceiver or an input/output interface.

In another implementation, the communication apparatus is a chip arranged in the first network element. When the communication apparatus is the chip arranged in the first network element, the communication interface may be an input/output interface.

According to a seventh aspect, a processor is provided, including: an input circuit, an output circuit, and a processing circuit. The processing circuit is configured to receive a signal through the input circuit, and transmit a signal through the output circuit, so that the processor performs the method according to any one of the possible implementations of the first aspect and the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory; receive a signal through a receiver; and transmit a signal through a transmitter, to perform the method according to any one of the possible implementations of the first aspect and the second aspect.

Optionally, one or more processors are provided, and one or more memories are provided.

Optionally, the memory may be integrated with the processor, or the memory and the processor may be disposed separately.

In a specific implementation process, the memory may be a non-transitory (non-transitory) memory, like a read-only memory (read-only memory, ROM). The memory and the processor may be integrated into one chip, or may be separately arranged in different chips. A type of the memory and a manner in which the memory and the processor are arranged are not limited in embodiments of this application.

It should be understood that a related data exchange process, for example, sending of first information, may be a process of outputting the first information from the processor, or receiving of first information, may be a process of receiving the input first information by the processor. Specifically, data output by the processor may be output to the transmitter, and input data received by the processor may be from the receiver. The transmitter and the receiver may be collectively referred to as a transceiver.

The processing apparatus in the eighth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program runs, a computer is enabled to perform the method according to any one of the possible implementations of the first aspect and the second aspect.

According to a tenth aspect, a computer-readable storage medium is provided. The computer-readable storage medium stores a computer program (which may also be referred to as code or instructions). When the computer program runs on a computer, the method according to any one of the possible implementations of the first aspect and the second aspect is performed.

According to an eleventh aspect, a communication system is provided, including the foregoing data analysis network element and first network element, where the data analysis network element is configured to perform the method according to any one of the first aspect and the possible implementations of the first aspect, and the first network element is configured to perform the method according to any one of the second aspect and the possible implementations of the second aspect.

### BRIEF DESCRIPTION OF DRAWINGS

FIG. 1 is a diagram of a communication system applicable to this application;
FIG. 2 is a schematic flowchart of a method according to an embodiment of this application;
FIG. 3 is a schematic flowchart of a method according to an embodiment of this application;
FIG. 4 is a schematic flowchart of a method according to an embodiment of this application;
FIG. 5 is a schematic flowchart of a method according to an embodiment of this application;
FIG. 6 is a diagram of a communication apparatus according to an embodiment of this application;
FIG. 7 is a block diagram of a communication apparatus according to another embodiment of this application; and
FIG. 8 is a diagram of a chip system according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system or a future communication system, or the like. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (internet of things, IoT) communication system, a vehicle-to-everything (vehicle-to-everything, V2X) communication system, an uncrewed aerial vehicle (uncrewed aerial vehicle, UAV) communication system, or another communication system.

The following describes the technical solutions in embodiments of this application with reference to the accompanying drawings in embodiments of this application. In the descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or technical solution described as an "example" or "for example" in embodiments of this application should not be explained as being more preferred or having more advantages than another embodiment or technical solution. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

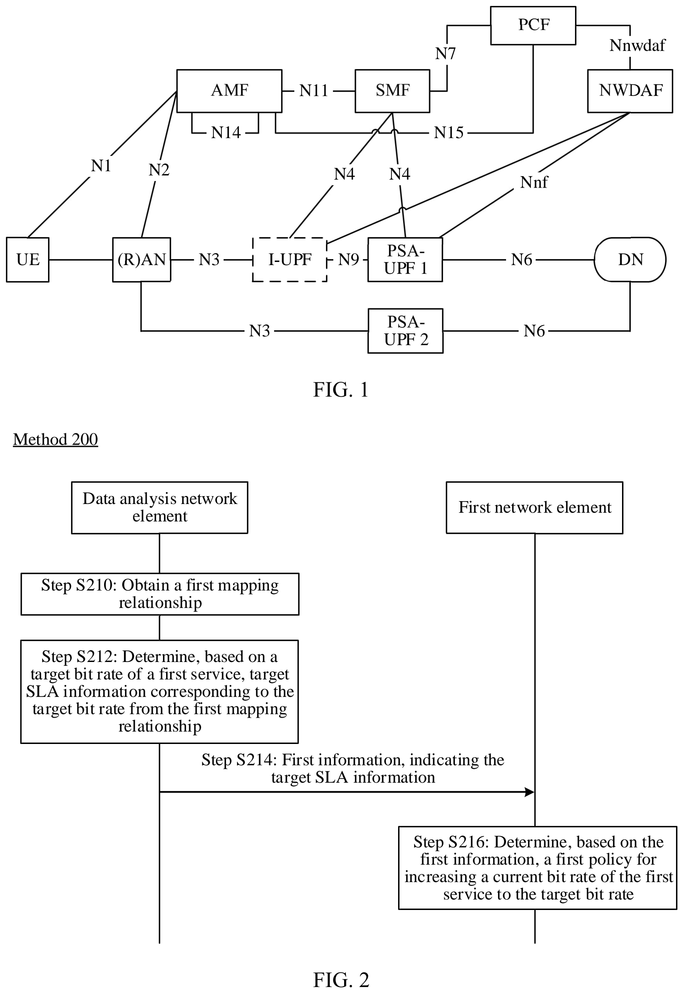

FIG. 1 shows a network architecture applicable to an embodiment of this application. As shown in FIG. 1, the network architecture may include:
1. User equipment (user equipment, UE) may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, an uncrewed aerial vehicle, a wearable device, a terminal device in a 5G network, a terminal device in an evolved PLMN, or the like. This is not limited in embodiments of this application.
2. An access network (access network, AN) is used to provide a network access function for an authorized user in a specific area, and can use transmission tunnels with different quality based on user levels, service requirements, and the like. The access network may be an access network using different access technologies. Conventional access network technologies include: a radio access network technology used in a 3rd generation (3rd generation, 3G) system, a radio access network technology used in a 4th generation (4th generation, 4G) system, or a next generation radio access network (next generation radio access network, NG-RAN) technology (for example, a radio access network technology used in a 5G system).

An access network that implements an access network function based on a wireless communication technology may be referred to as a radio access network (radio access network, RAN). The radio access network can manage radio resources, provide an access service for a terminal, and further complete forwarding of a control signal and user data between a terminal and a core network.

A radio access network device may be, for example, a base station (NodeB), an evolved NodeB (evolved NodeB, eNB or eNodeB), a next generation Node base station (next generation Node Base station, gNB) in a 5G mobile communication system, a base station in a future mobile communication system, an access point (access point, AP) in a Wi-Fi wireless hotspot system, or the like, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology and a specific device form that are used by the radio access network device are not limited in embodiments of this application.

3. An access management network element is mainly used for mobility management and access management, is responsible for transferring a user policy between user equipment and a policy control function (policy control function, PCF) network element, and may be configured to implement a function other than session management in a mobility management entity (mobility management entity, MME) function, for example, an access authorization (authentication) function.

In a 5G communication system, the access management network element may be an access and mobility management function (access and mobility management function, AMF) network element. In a future communication system, the access management network element may be an AMF network element, or may have another name. This is not limited in this application.

4. A session management network element is mainly for session management, allocation and management of an internet protocol (internet protocol, IP) address of user equipment, selection and control of a user plane function, termination of interfaces toward policy control and charging functions, downlink data communication, and the like.

In the 5G communication system, the session management network element may be a session management function (session management function, SMF) network element. In the future communication system, the session management network element may be an SMF network element, or may have another name. This is not limited in this application.

5. A user plane network element is configured for packet routing and forwarding, quality of service (quality of service, QoS) handling for user plane data, user plane data forwarding, session/flow-level charging statistics collection, implementing a bandwidth limiting function, and the like.

In the 5G communication system, the user plane network element may be a user plane function (user plane function, UPF) network element. In the future communication system, the user plane network element may be a UPF network element, or may have another name. This is not limited in this application.

For example, the UPF may include a protocol data unit (protocol data unit, PDU) session anchor UPF (PDU session anchor UPF, PSA-UPF) and an intermediate UPF (intermediate UPF, I-UPF). The PSA-UPF includes a PSA-UPF 1 and a PSA-UPF 2 shown in FIG. 1.

The PSA-UPF is a UPF that supports a PDU session anchor function, is a UPF connected to a DN through an N6 interface, and is responsible for data transmission between the core network and a data network. All UPFs between the (R)AN and the PSA-UPF are referred to as I-UPFs.

6. A data network element is configured to provide a network for data transmission.

In the 5G communication system, the data network element may be a data network (data network, DN) element. In the future communication system, the data network element may be a DN network element, or may have another name. This is not limited in this application.

7. A network repository function (network repository function, NRF) entity is configured to store description information of a network function entity and description information of a service provided by the network function entity, and support service discovery, network element entity discovery, and the like.

8. A policy control network element is configured to guide network behavior by using a unified policy framework, provide policy rule information for a control plane function network element (for example, an AMF or SMF network element), and the like.

In the 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may be a PCF network element, or may have another name. This is not limited in this application.

9. A network data analysis function (network data analysis function, NWDAF) network element may be configured to collect data from a network element, an application function (application function, AF) server, and an operations, administration, and maintenance (operation administration and maintenance, OAM) system side, analyze the data by using solutions such as machine learning and artificial intelligence, and feed back the data to the network element, the AF server, and the like for network or service configuration optimization, to provide better network quality and service experience.

In the architecture shown in FIG. 1, names and functions of interfaces between network elements are as follows:
1. N1 is an interface between the AMF and the UE, and may be configured to transfer a QoS control rule or the like to the UE.
2. N2 is an interface between the AMF and the RAN, and may be configured to transfer radio bearer control information or the like from a core network side to the RAN.
3. N3 is an interface between the RAN and the UPF, and is configured to transfer uplink and downlink user plane data between the RAN and the UPF.
4. N4 is an interface between the SMF and the UPF, and may be configured to perform transfer of information between a control plane and a user plane, including delivering of a forwarding rule, a QoS control rule, a traffic statistics collection rule, or the like from the control plane to the user plane, and information reporting by the user plane.
5. N6 is an interface between the UPF and the DN, and is configured to transfer uplink and downlink user data flows between the UPF and the DN.
6. N7 is an interface between the SMF and the PCF, and is configured to transfer a user policy or the like.
7. N9 is a user plane interface between UPFs, and is configured to transfer uplink and downlink user data flows between the UPFs.
8. N14 is an interface between AMFs, and is configured to transfer a UE context or the like.
9. N15 is an interface between the AMF and the PCF, and is configured to transfer an access network discovery policy, a user route selection policy, or the like.
10. Service-oriented interfaces Nnwdaf and Nnf are service-oriented interfaces provided by the foregoing NWDAF network element and UPF network element respectively, and are configured to invoke corresponding service-oriented operations.

It should be understood that the foregoing network architecture applied to embodiments of this application is merely an example for description, and a network architecture applicable to embodiments of this application is not limited thereto. Any network architecture that can implement the functions of the foregoing network elements is applicable to embodiments of this application.

It should be further understood that the AMF, the SMF, the UPF, the PCF, the NWDAF, and the like shown in FIG. 1 may be understood as network elements configured to implement different functions in the core network, for example, may be combined as required to form a network slice. The core network elements may be independent devices, or may be integrated into a same device to implement different functions. A specific form of the foregoing network elements is not limited in this application.

It should be further understood that the names are defined merely for ease of distinguishing between different functions, and should not constitute any limitation on this application. This application does not exclude a possibility that another name is used in the 5G network and another future network. For example, in a 6G network, some or all of the foregoing networks may still use terms in 5G, or may use other names. A name of an interface between network elements in FIG. 1 is merely an example. In specific implementation, the name of the interface may be another name. This is not specifically limited in this application. In addition, names of messages (or signaling) transmitted between the foregoing network elements are merely examples, and do not constitute any limitation on functions of the messages.

It should be noted that the foregoing "network element" may also be referred to as an entity, a device, an apparatus, a module, or the like, and there is no particular limitation in this application herein. In addition, in this application, for ease of understanding and description, descriptions of the "network element" are omitted in some descriptions. For example, a PCF network element is referred to as a PCF for short. In this case, the "PCF" should be understood as a PCF network element or a PCF entity. Descriptions of same or similar cases are omitted below.

During play of a video source, by using an adaptive bit rate streaming (adaptive bit rate streaming, ABS) technology, quality of a video stream may be adjusted based on a first packet latency, round trip time, a packet loss rate, a retransmission rate, an out-of-order rate, a latency jitter, a user bandwidth, and memory usage, and the like that are monitored in real time. Therefore, a player client needs to use an encoder to encode a single video source into video streams with a plurality of bit rates. Therefore, the player client performs switching between video streams with different bit rates based on the ABS technology. When the player client starts to play the video source, the player client first requests a video stream with a default bit rate or a video stream with a bit rate recorded during historical access. If the player client determines that a current network condition is better (for example, a latency is low or a bandwidth is large), a quantity of currently buffered data is large, currently available resources are sufficient, or the like, the player requests a video stream with a higher bit rate. If the player determines that the current network condition is worse (for example, the latency is high or the bandwidth is small), the quantity of currently buffered data is small, the currently available resources are insufficient, or the like, the player requests a video stream with a lower bit rate. By using the ABS technology, less buffer and faster play can be obtained, so that good experience can be provided for both low-end and high-end services.

For many newly deployed networks, how to quickly fill a pipeline and implement traffic stimulation to improve resource utilization is what operators pursue. Currently, there is no technical solution to implement traffic stimulation.

In view of this, an embodiment of this application provides a method 200 for implementing traffic stimulation, to use a high bit rate for transmission.

Step S210: A data analysis network element obtains a first mapping relationship, where the first mapping relationship indicates a correspondence between a plurality of bit rates and a plurality of pieces of service level agreement (service level agreement, SLA) information.

Specifically, the correspondence between the plurality of bit rates and the plurality of pieces of SLA information means that the plurality of bit rates and the plurality of pieces of SLA information are in one-to-one correspondence.

Step S212: The data analysis network element determines, based on a target bit rate of a first service, target SLA information corresponding to the target bit rate from the first mapping relationship.

The target bit rate of the first service is greater than a current bit rate of the first service.

Specifically, the first mapping relationship indicates a correspondence between the target bit rate and the target SLA information.

Specifically, the target SLA information includes at least one of the following information:
an average latency of transmission of the first service, a peak latency of transmission of the first service, a latency jitter of transmission of the first service, a first packet response latency of transmission of the first service, an average transmission bandwidth of the first service, a peak transmission bandwidth of the first service, a 5G quality of service identifier (5G quality of service identifier, 5QI) of the first service, a quality of service class identifier (quality of service class identifier, QCI) of the first service, a priority of a service data flow (service data flow, SDF) of the first service, a guaranteed bit rate (guaranteed bit rate, GBR) of the SDF of the first service, a maximum bit rate (maximum bit rate, MBR) of the SDF of the first service, a packet error loss rate (packet error loss rate, PELR) of the first service, and the like.

Step S214: The data analysis network element sends first information to a first network element, where the first information indicates the target SLA information.

Specifically, the first information may include the target SLA information, or the first information may include a difference between the target SLA information and current SLA information of the first service.

Specifically, the first information may indicate at least one of the information included in the target SLA information. For example, the first information may indicate a target peak bandwidth of the first service, or the first information may indicate a target priority of the SDF of the first service and a target GBR of the SDF of the first service. Specific information in the SLA information indicated by the first information is not limited in this application.

Step S216: The first network element determines a first policy based on the first information, where the first policy is for increasing the current bit rate of the first service to the target bit rate.

Specifically, the first network element may be any one of a PCF network element, an SMF network element, a UPF network element, and the like. The first network element is not limited in this application.

Specifically, after the first network element executes the first policy, a terminal device may perceive changes of a plurality of key performance indicators (key performance indicators, KPIs) and/or a plurality of key quality indicators (key quality indicators, KQIs), so that a transmission bit rate of the first service can be adaptively increased.

According to the method 200, the bit rate of performing transmission of the first service by the terminal device can be increased, to quickly fill a pipeline, and implement traffic stimulation.

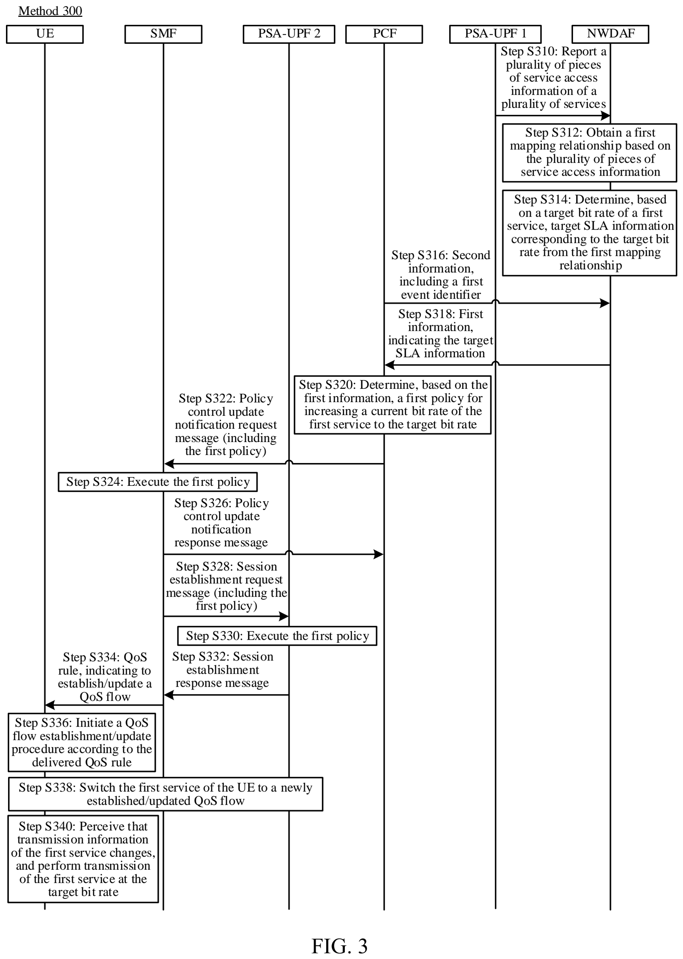

First, for ease of understanding the technical solutions in this application, the following describes a technical solution, for example, a method 300 shown in FIG. 3, in this application in detail by using an example in which the first network element is the PCF network element.

Step S310: A PSA-UPF 1 supports and reports a plurality of pieces of service access information of a plurality of services. Correspondingly, an NWDAF receives the plurality of pieces of service access information of the plurality of services.

The plurality of services and the plurality of pieces of service access information are in one-to-one correspondence, and each of the plurality of pieces of service access information includes at least one of a bit rate, SLA information, a KPI, a KQI, and the like of a service. When service access information of a service does not include a bit rate of the service, the NWDAF may determine a current bit rate of the service based on a KPI of the service.

Specifically, the SLA information of the service includes at least one of the following information:
an average latency of transmission of the service, a peak latency of transmission of the service, a latency jitter of transmission of the service, a first packet response latency of transmission of the service, an average transmission bandwidth of the service, a peak transmission bandwidth of the service, a 5QI of the service, a QCI of the service, a priority of an SDF of the service, a GBR of the SDF of the service, an MBR of the SDF of the service, a PELR of the service, and the like.

Specifically, each of the plurality of services may be a category service, for example, a short video or an on-demand video; or each of the plurality of services may be a subcategory service of a category service, for example, a TikTok short video, a TikTok live broadcast, a Tencent conference, or a cloud game.

Specifically, the KPI of the service specifically includes at least one of the following information: a first packet latency, round trip time (round trip time, RTT), a packet loss rate, a retransmission rate, an out-of-order rate, a latency jitter, and the like; and the KQI of the service specifically includes at least one of the following information: a resolution, a frame rate, a buffer latency, a quantity of short video headers, a hypertext transfer protocol (hypertext transfer protocol, HTTP) response latency, a freezing ratio, and the like.

The KPI of the service and/or the KQI of the service may be a KPI and/or a KQI corresponding to the SLA information of the service. The KPI of the service and/or the KQI of the service is generally a result of performing, in a network, measurement and evaluation on the service.
Step S312: The NWDAF obtains a first mapping relationship based on the plurality of pieces of service access information, where the first mapping relationship indicates a correspondence between a plurality of bit rates and a plurality of pieces of SLA information.

Specifically, the first mapping relationship specifically indicates the correspondence between the plurality of bit rates of the plurality of services and the plurality of pieces of SLA information of the plurality of services.

Optionally, when the NWDAF receives information such as KPIs and KQIs of the plurality of services, the first mapping relationship specifically indicates a correspondence between the plurality of bit rates of the plurality of services, and the plurality of pieces of SLA information, the plurality of KPIs, and the plurality of KQIs of the plurality of services.

In an implementation, another NWDAF network element determines the first mapping relationship based on the plurality of pieces of service access information, and imports the first mapping relationship to the NWDAF.

Step S314: The NWDAF determines, based on a target bit rate of a first service, target SLA information corresponding to the target bit rate from the first mapping relationship.

Specifically, UE is activated in a network, the network establishes a PDU session for the UE, and the UE performs transmission of the first service at a current bit rate based on the established PDU session. The first service may belong to the plurality of services.

Specifically, an SDF of the first service accessed by the UE sequentially passes through the UE, a RAN, a PSA-UPF 2, and an AF server.

Specifically, the PSA-UPF 1 is any PSA-UPF, the PSA-UPF 2 is a PSA-UPF serving the UE, and the PSA-UPF 2 may also support and report the plurality of pieces of service access information of the plurality of services. This is not limited in this application.

Specifically, the target bit rate of the first service is greater than the current bit rate of the first service.

Step S316: The PCF sends second information to the NWDAF, where the second information may be subscription information or query information.

Specifically, when the second information is a subscription message (Nnwdaf_AnalyticsSubscription_Subscribe), the second information includes a first event identifier. Optionally, the second information may further include a subscription permanent identifier (subscription permanent identifier, SUPI) that needs to be subscribed and an identifier of a service that needs to be subscribed. The service that needs to be subscribed herein includes the first service.

Specifically, the first event identifier (traffic stimulation) identifies a bit rate increase event of the service that needs to be subscribed.

Specifically, when the second information is a query request message (Nnwdaf_AnalyticInfo_Request), the second information includes the first event identifier, a SUPI requested to be queried for, and an identifier of a service requested to be queried for. The service requested to be queried for herein includes the first service.

Step S318: The NWDAF sends first information to the PCF based on the second information, where the first information indicates the target SLA information.

Specifically, the first information may include the target SLA information, or the first information may include a difference between the target SLA information and current SLA information of the first service.

Specifically, the first information may indicate at least one of the information included in the target SLA information. For example, the first information may indicate a target peak bandwidth of the first service, or the first information may indicate a target priority of the SDF of the first service or a target GBR of the SDF of the first service. Specific information in the SLA information indicated by the first information is not limited in this application.

Specifically, the NWDAF compares the current SLA information corresponding to the first service whose transmission is performed at the current bit rate with the target SLA information of the first service whose transmission is performed at the target bit rate, to determine at least one indicator that is in the SLA information and that can be optimized, and feeds back the at least one indicator to the PCF by using the first information.

Alternatively, the NWDAF may feed back the current SLA information of the first service and the target SLA information of the first service to the PCF by using the first information, and the PCF compares the current SLA information corresponding to the first service with the target SLA information of the first service, to determine at least one indicator that is in the SLA information and that can be optimized.

Alternatively, the NWDAF may feed back the current bit rate of the first service, the current SLA information of the first service, the target bit rate of the first service, and the target SLA information of the first service to the PCF by using the first information, and the PCF compares the current SLA information corresponding to the first service with the target SLA information of the first service, to determine at least one indicator that is in the SLA information and that can be optimized.

Optionally, the first information may further include at least one of the first event identifier, an identifier of the UE, an identifier of the first service, traffic flow template (traffic flow template, TFT) information corresponding to the SDF of the first service, and a second policy. The second policy is a policy recommended by the NWDAF to the PCF based on the target SLA information, for reference by the PCF.

Specifically, if the second information is the subscription message (Nnwdaf_AnalyticsSubscription_Subscribe), the first information may be a subscription notification message (Nnwdaf_AnalyticsSubscription_Notify); or if the second information is the query request message (Nnwdaf_AnalyticInfo_Request), the first information may be a query request response message (Nnwdaf_AnalyticInfo_Request response).

Step S320: The PCF determines a first policy based on the first information, where the first policy is for increasing the current bit rate of the first service to the target bit rate.

Optionally, the PCF may determine the first policy based on the first information and the second policy.

Optionally, the first policy may be the same as or different from the second policy. This is not limited in this application.

For example, to increase the current bit rate of the first service to the target bit rate, the first policy may specifically be establishing a high-priority GBR-type QoS flow to perform transmission of the first service.

It should be noted that the first policy may alternatively be establishing a dedicated radio bearer (radio bearer, RB) or the like. This is not limited in this application. This application provides descriptions by using an example in which the first policy is establishing a high-priority GBR-type QoS flow to perform transmission of the first service.

Step S322: The PCF notifies an SMF of the first policy.

Specifically, the PCF may notify the SMF of the first policy by using a policy control update notification request message (Npcf_SMPolicyControl_UpdateNotify request).

Step S324: The SMF executes the first policy. Step S326: The SMF sends a policy control update notification response message (Npcf_SMPolicyControl_UpdateNotify response) to the PCF.

Specifically, in step S328, the SMF sends a session establishment/update request message (Session Establishment Request) to the PSA-UPF 2 based on the received first policy, to request to change a PDU session.

Step S330: The PSA-UPF 2 executes, based on the received session establishment/update request message, the first policy: establishing a new high-priority GBR-type QoS flow; or if a high-priority GBR-type QoS flow already exists, the PSA-UPF 2 may update the high-priority GBR-type QoS flow.

Step S332: The PSA-UPF 2 sends a session establishment/update response message (Session Establishment Response) to the SMF. The message includes quintuple information of the SDF of the first service.

Step S334: The SMF generates a QoS rule (QoSRule) by using the quintuple information of the SDF as a TFT, and delivers the QoS rule to the UE, where the QoS rule indicates the UE to establish/update a QoS flow.

Step S336: The UE initiates a QoS flow establishment/update procedure according to the delivered QoS rule.

Step S338: Switch transmission of the first service of the UE to a newly established/updated QoS flow.

Step S340: When the UE performs transmission of the first service based on the newly established/updated QoS flow, if the UE perceives that transmission information such as a first packet latency, round trip time, a packet loss rate, a retransmission rate, an out-of-order rate, a latency jitter, a user bandwidth, and memory usage of the first service carried by the network changes, and finds that an SLA requirement on performing transmission of the first service at a high bit rate is already met, the UE performs transmission of data of the first service at the target bit rate.

Specifically, the UE may perform perception by measuring, in real time, the information such as the first packet latency, the round trip time, the packet loss rate, the retransmission rate, the out-of-order rate, the latency jitter, the user bandwidth, and the memory usage of the first service carried by the network.

For example, a current transmission bandwidth of the first service is 16 Mbps, a current latency of the first service corresponding to the transmission bandwidth of 16 Mbps is 10 ms, the packet loss rate is 5%, and the transmission bit rate is 1500 kbps. According to the first policy determined by using the method 300, the transmission bandwidth of the first service is increased to 20 Mbps, the latency of the first service corresponding to the transmission bandwidth of 20 Mbps is reduced to 5 ms, and the packet loss rate is reduced to 2%. The UE perceives a decrease in the latency, a decrease in the packet loss rate, and the like, that is, the UE perceives an increase in an SLA provided by the network. Therefore, the UE automatically adjusts the transmission bit rate of the first service from 1500 kbps to 3500 kbps.

In the foregoing example, the transmission bandwidth of 20 Mbps may correspond to the foregoing target SLA information; the transmission bandwidth of 16 Mbps may correspond to the foregoing current SLA information; the current latency 10 ms of the first service corresponding to the transmission bandwidth of 16 Mbps, the packet loss rate of 5%, the latency of the first service that corresponds to the transmission bandwidth of 20 Mbps and that is reduced to 5 ms, and the packet loss rate reduced to 2% correspond to the foregoing KPI; the transmission bit rate 3500 kbps of the first service corresponds to the foregoing target bit rate; and the transmission bit rate 1500 kbps of the first service corresponds to the foregoing current bit rate.

In addition, the PSA-UPF 1 may continuously report bit rates of various services and SLA information of the various services to the NWDAF, so that the NWDAF can continuously improve the first mapping relationship.

According to the method 300, the bit rate of performing transmission of the first service by the UE can be increased, to quickly fill a pipeline, and implement traffic stimulation.

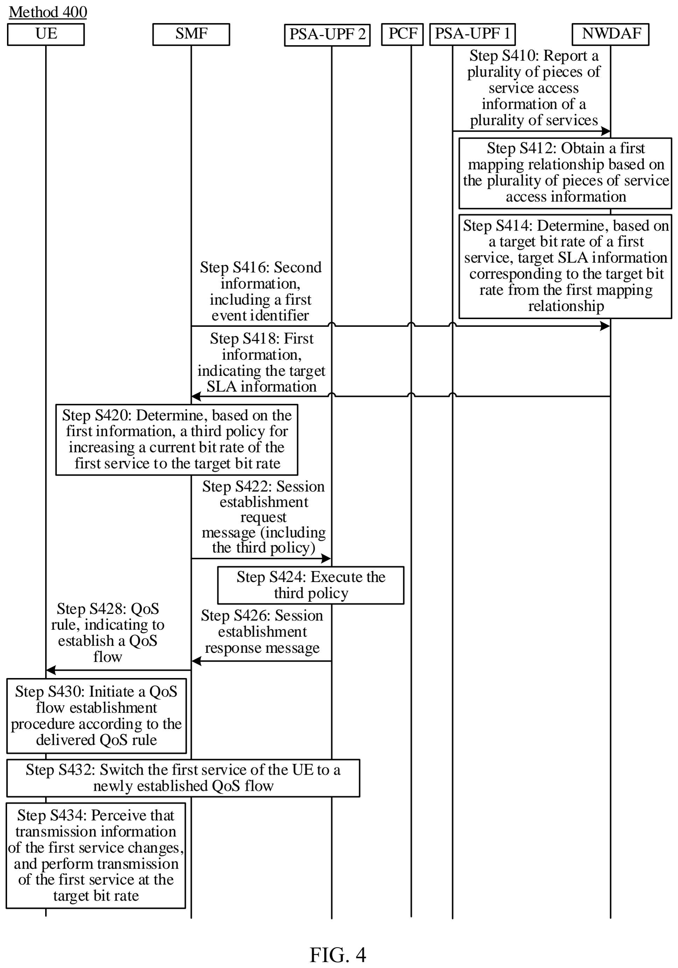

Then, for ease of understanding the technical solutions in this application, the following describes a technical solution, for example, a method 400 shown in FIG. 4, in this application in detail by using an example in which the first network element is the SMF network element.

Step S410: A PSA-UPF 1 supports and reports a plurality of pieces of service access information of a plurality of services. Correspondingly, an NWDAF receives the plurality of pieces of service access information of the plurality of services.

The plurality of services and the plurality of pieces of service access information are in one-to-one correspondence, and each of the plurality of pieces of service access information includes at least one of a bit rate, SLA information, a KPI, a KQI, and the like of a service. When service access information of a service does not include a bit rate of the service, the NWDAF may determine a current bit rate of the service based on a KPI of the service.

Specifically, the SLA information of the service includes at least one of the following information:
an average latency of transmission of the service, a peak latency of transmission of the service, a latency jitter of transmission of the service, a first packet response latency of transmission of the service, an average transmission bandwidth of the service, a peak transmission bandwidth of the service, a 5QI of the service, a QCI of the service, a priority of an SDF of the service, a GBR of the SDF of the service, an MBR of the SDF of the service, a PELR of the service, and the like.

Specifically, each of the plurality of services may be a category service, for example, a short video or an on-demand video; or each of the plurality of services may be a subcategory service of a category service, for example, a TikTok short video, a TikTok live broadcast, a Tencent conference, or a cloud game.

Specifically, the KPI of the service specifically includes at least one of the following information: a first packet latency, RTT, a packet loss rate, a retransmission rate, an out-of-order rate, a latency jitter, and the like; and the KQI of the service specifically includes at least one of the following information: a resolution, a frame rate, a buffer latency, a quantity of short video headers, an HTTP response latency, a freezing ratio, and the like.

Step S412: The NWDAF obtains a first mapping relationship based on the plurality of pieces of service access information, where the first mapping relationship indicates a correspondence between a plurality of bit rates and a plurality of pieces of SLA information.

Specifically, the first mapping relationship specifically indicates the correspondence between the plurality of bit rates of the plurality of services and the plurality of pieces of SLA information of the plurality of services.

Optionally, when the NWDAF receives information such as KPIs and KQIs of the plurality of services, the first mapping relationship specifically indicates a correspondence between the plurality of bit rates of the plurality of services, and the plurality of pieces of SLA information, the plurality of KPIs, and the plurality of KQIs of the plurality of services.

Step S414: The NWDAF determines, based on a target bit rate of a first service, target SLA information corresponding to the target bit rate from the first mapping relationship.

Specifically, UE is activated in a network, the network establishes a PDU session for the UE, and the UE performs transmission of the first service at a current bit rate based on the established PDU session. The first service may belong to the plurality of services.

Specifically, an SDF of the first service accessed by the UE sequentially passes through the UE, a RAN, a PSA-UPF 2, and an AF server.

Specifically, the PSA-UPF 1 is any PSA-UPF, the PSA-UPF 2 is a PSA-UPF serving the UE, and the PSA-UPF 2 may also support and report the plurality of pieces of service access information of the plurality of services. This is not limited in this application.

Specifically, the target bit rate of the first service is greater than the current bit rate of the first service.

Step S416: The SMF sends second information to the NWDAF, where the second information may be subscription information or query information.

Specifically, when the second information is a subscription message (Nnwdaf_AnalyticsSubscription_Subscribe), the second information includes a first event identifier. Optionally, the second information may further include a SUPI that needs to be subscribed and an identifier of a service that needs to be subscribed. The service that needs to be subscribed herein includes the first service.

Specifically, the first event identifier (traffic stimulation) identifies a bit rate increase event of the service that needs to be subscribed.

Specifically, when the second information is a query request message (Nnwdaf_AnalyticInfo_Request), the second information includes the first event identifier, a SUPI requested to be queried for, and an identifier of a service requested to be queried for. The service requested to be queried for herein includes the first service.

Step S418: The NWDAF sends first information to the SMF based on the second information, where the first information indicates the target SLA information.

Specifically, the first information may include the target SLA information, or the first information may include a difference between the target SLA information and current SLA information of the first service.

Specifically, the first information may indicate at least one of the information included in the target SLA information. For example, the first information may indicate a target peak bandwidth of the first service, or the first information may indicate a target priority of the SDF of the first service or a target GBR of the SDF of the first service. Specific information in the SLA information indicated by the first information is not limited in this application.

Specifically, the NWDAF compares the current SLA information corresponding to the first service whose transmission is performed at the current bit rate with the target SLA information of the first service whose transmission is performed at the target bit rate, to determine at least one indicator that is in the SLA information and that can be optimized, and feeds back the at least one indicator to the SMF by using the first information.

Alternatively, the NWDAF may feed back the current SLA information of the first service and the target SLA information of the first service to the SMF by using the first information, and the SMF compares the current SLA information corresponding to the first service with the target SLA information of the first service, to determine at least one indicator that is in the SLA information and that can be optimized.

Alternatively, the NWDAF may feed back the current bit rate of the first service, the current SLA information of the first service, the target bit rate of the first service, and the target SLA information of the first service to the SMF by using the first information, and the SMF compares the current SLA information corresponding to the first service with the target SLA information of the first service, to determine at least one indicator that is in the SLA information and that can be optimized.

Optionally, the first information may further include at least one of the first event identifier, an identifier of the UE, an identifier of the first service, TFT information corresponding to the SDF of the first service, and a fourth policy. The fourth policy is a policy recommended by the NWDAF to the SMF based on the target SLA information, for reference by the SMF.

Specifically, if the second information is the subscription message (Nnwdaf_AnalyticsSubscription_Subscribe), the first information may be a subscription notification message (Nnwdaf_AnalyticsSubscription_Notify); or if the second information is the query request message (Nnwdaf_AnalyticInfo_Request), the first information may be a query request response message (Nnwdaf_AnalyticInfo_Request response).

Step S420: The SMF determines a third policy based on the first information, where the third policy is for increasing the current bit rate of the first service to the target bit rate.

Optionally, the SMF may determine the third policy based on the first information and the fourth policy.

Optionally, the third policy may be the same as or different from the fourth policy. This is not limited in this application.

For example, to increase the current bit rate of the first service to the target bit rate, the third policy may specifically be selecting a UPF of a specific slice to perform transmission of the first service.

It should be noted that the third policy may alternatively be selecting a UPF having edge computing (mobile/multi-access edge computing, MEC) deployment to perform transmission of the first service, or selecting an uplink classifier (uplink classifier, ULCL) to offload the SDF of the first service to another UPF for transmission. This is not limited in this application. This application provides descriptions by using an example in which the third policy is selecting the UPF of the specific slice to perform transmission of the first service.

Step S422: The SMF sends a session establishment request message (Session Establishment Request) to the PSA-UPF 2, to request to establish a new PDU session.

Step S424: The PSA-UPF 2 executes the third policy based on the received session establishment request message.

Specifically, the PSA-UPF 2 herein may be considered as the UPF of the specific slice.

Specifically, the PSA-UPF 2 establishes the new PDU session for the UE according to the third policy. In addition, the PSA-UPF 2 installs a packet detection rule (packet detection rule, PDR) delivered by the SMF, and performs corresponding perception, statistics collection, a control policy, and the like on the SDF of the first service of the UE according to the PDR.

Step S426: The PSA-UPF 2 sends a session establishment response message (Session Establishment Response) to the SMF. The message includes quintuple information of the SDF of the first service.

Step S428: The SMF generates a QoS rule (QoSRule) by using the quintuple information of the SDF as a TFT, and delivers the QoS rule to the UE, where the QoS rule indicates the UE to establish a QoS flow.

Step S430: The UE initiates a QoS flow establishment procedure according to the delivered QoS rule.

Step S432: Switch transmission of the first service of the UE to a newly established QoS flow.

Step S434: When the UE performs transmission of the first service based on the newly established QoS flow, if the UE perceives that transmission information such as a first packet latency, round trip time, a packet loss rate, a retransmission rate, an out-of-order rate, a latency jitter, a user bandwidth, and memory usage of the first service carried by the network changes, and finds that an SLA requirement on performing transmission of the first service at a high bit rate is already met, the UE performs transmission of data of the first service at the target bit rate.

Specifically, the UE may perform perception by measuring, in real time, the information such as the first packet latency, the round trip time, the packet loss rate, the retransmission rate, the out-of-order rate, the latency jitter, the user bandwidth, and the memory usage of the first service carried by the network.

In addition, the PSA-UPF 1 may continuously report bit rates of various services and SLA information of the various services to the NWDAF, so that the NWDAF can continuously improve the first mapping relationship.

According to the method 400, the bit rate of performing transmission of the first service by the UE can be increased, to quickly fill a pipeline, and implement traffic stimulation.

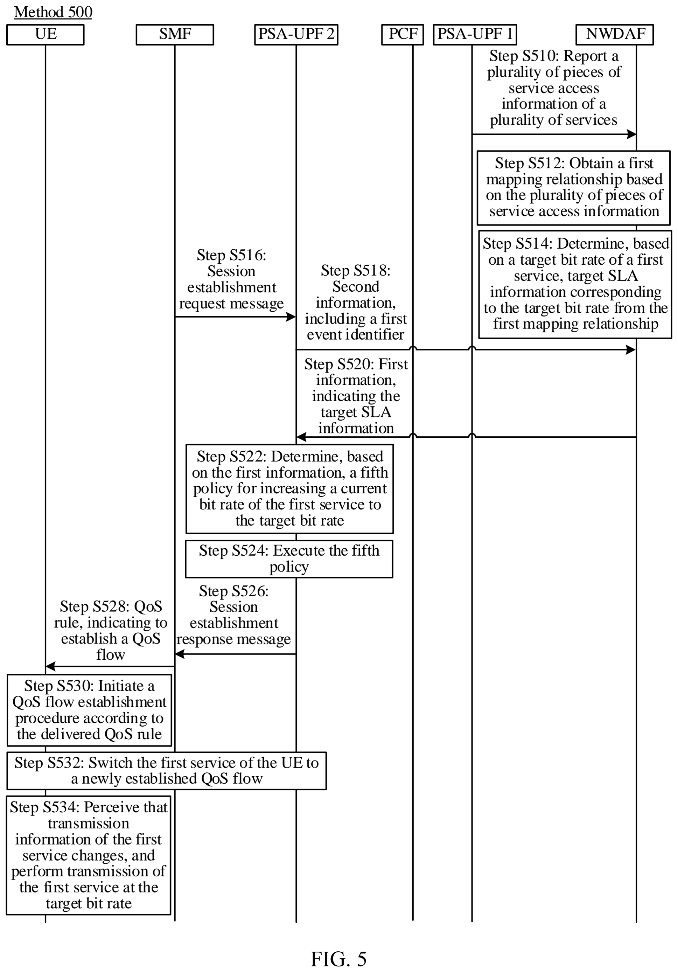

Finally, for ease of understanding the technical solutions in this application, the following describes a technical solution, for example, a method 500 shown in FIG. 5, in this application in detail by using an example in which the first network element is the UPF network element.

Step S510: A PSA-UPF 1 supports and reports a plurality of pieces of service access information of a plurality of services. Correspondingly, an NWDAF receives the plurality of pieces of service access information of the plurality of services.

The plurality of services and the plurality of pieces of service access information are in one-to-one correspondence, and each of the plurality of pieces of service access information includes at least one of a bit rate, SLA information, a KPI, a KQI, and the like of a service. When service access information of a service does not include a bit rate of the service, the NWDAF may determine a current bit rate of the service based on a KPI of the service.

Specifically, the SLA information of the service includes at least one of the following information:
an average latency of transmission of the service, a peak latency of transmission of the service, a latency jitter of transmission of the service, a first packet response latency of transmission of the service, an average transmission bandwidth of the service, a peak transmission bandwidth of the service, a 5QI of the service, a QCI of the service, a priority of an SDF of the service, a GBR of the SDF of the service, an MBR of the SDF of the service, a PELR of the service, and the like.

Specifically, each of the plurality of services may be a category service, for example, a short video or an on-demand video; or each of the plurality of services may be a subcategory service of a category service, for example, a TikTok short video, a TikTok live broadcast, a Tencent conference, or a cloud game.

Specifically, the KPI of the service specifically includes at least one of the following information: a first packet latency, RTT, a packet loss rate, a retransmission rate, an out-of-order rate, a latency jitter, and the like; and the KQI of the service specifically includes at least one of the following information: a resolution, a frame rate, a buffer latency, a quantity of short video headers, an HTTP response latency, a freezing ratio, and the like.

Step S512: The NWDAF obtains a first mapping relationship based on the plurality of pieces of service access information, where the first mapping relationship indicates a correspondence between a plurality of bit rates and a plurality of pieces of SLA information.

Specifically, the first mapping relationship specifically indicates the correspondence between the plurality of bit rates of the plurality of services and the plurality of pieces of SLA information of the plurality of services.

Optionally, when the NWDAF receives information such as KPIs and KQIs of the plurality of services, the first mapping relationship specifically indicates a correspondence between the plurality of bit rates of the plurality of services, and the plurality of pieces of SLA information, the plurality of KPIs, and the plurality of KQIs of the plurality of services.

Step S514: The NWDAF determines, based on a target bit rate of a first service, target SLA information corresponding to the target bit rate from the first mapping relationship.

Specifically, UE is activated in a network, the network establishes a PDU session for the UE, and the UE performs transmission of the first service at a current bit rate based on the established PDU session. The first service may belong to the plurality of services.

Specifically, an SDF of the first service accessed by the UE sequentially passes through the UE, a RAN, a PSA-UPF 2, and an AF server.

Specifically, the PSA-UPF 1 is any PSA-UPF, the PSA-UPF 2 is a PSA-UPF serving the UE, and the PSA-UPF 2 may also support and report the plurality of pieces of service access information of the plurality of services. This is not limited in this application.

Specifically, the target bit rate of the first service is greater than the current bit rate of the first service.

Step S516: The SMF sends a session establishment request message (Session Establishment Request) to the PSA-UPF 2, to request to establish a new PDU session.

After the PSA-UPF 2 receives the session establishment request message from the SMF, in step S518, the PSA-UPF 2 sends second information to the NWDAF, where the second information may be subscription information or query information.

Specifically, when the second information is a subscription message (Nnwdaf_AnalyticsSubscription_Subscribe), the second information includes a first event identifier. Optionally, the second information may further include a SUPI that needs to be subscribed and an identifier of a service that needs to be subscribed. The service that needs to be subscribed herein includes the first service.

Specifically, the first event identifier (traffic stimulation) identifies a bit rate increase event of the service that needs to be subscribed.

Specifically, when the second information is a query request message (Nnwdaf_AnalyticInfo_Request), the second information includes the first event identifier, a SUPI requested to be queried for, and an identifier of a service requested to be queried for. The service requested to be queried for herein includes the first service.

Step S520: The NWDAF sends first information to the PSA-UPF 2 based on the second information, where the first information indicates the target SLA information.

Specifically, the first information may include the target SLA information, or the first information may include a difference between the target SLA information and current SLA information of the first service.

Specifically, the first information may indicate at least one of the information included in the target SLA information. For example, the first information may indicate a target peak bandwidth of the first service, or the first information may indicate a target priority of the SDF of the first service or a target GBR of the SDF of the first service. Specific information in the SLA information indicated by the first information is not limited in this application.

Specifically, the NWDAF compares the current SLA information corresponding to the first service whose transmission is performed at the current bit rate with the target SLA information of the first service whose transmission is performed at the target bit rate, to determine at least one indicator that is in the SLA information and that can be optimized, and feeds back the at least one indicator to the PSA-UPF 2 by using the first information.

Alternatively, the NWDAF may feed back the current SLA information of the first service and the target SLA information of the first service to the PSA-UPF 2 by using the first information, and the PSA-UPF 2 compares the current SLA information corresponding to the first service with the target SLA information of the first service, to determine at least one indicator that is in the SLA information and that can be optimized.

Alternatively, the NWDAF may feed back the current bit rate of the first service, the current SLA information of the first service, the target bit rate of the first service, and the target SLA information of the first service to the PSA-UPF 2 by using the first information, and the PSA-UPF 2 compares the current SLA information corresponding to the first service with the target SLA information of the first service, to determine at least one indicator that is in the SLA information and that can be optimized.

Optionally, the first information may further include at least one of the first event identifier, an identifier of the UE, an identifier of the first service, TFT information corresponding to the SDF of the first service, and a sixth policy. The sixth policy is a policy recommended by the NWDAF to the SMF based on the target SLA information, for reference by the SMF.

Specifically, if the second information is the subscription message (Nnwdaf_AnalyticsSubscription_Subscribe), the first information may be a subscription notification message (Nnwdaf_AnalyticsSubscription_Notify); or if the second information is the query request message (Nnwdaf_AnalyticInfo_Request), the first information may be a query request response message (Nnwdaf_AnalyticInfo_Request response).

Step S522: The PSA-UPF 2 determines a fifth policy based on the first information, where the fifth policy is for increasing the current bit rate of the first service to the target bit rate.

Optionally, the PSA-UPF 2 may determine the third policy based on the first information and the sixth policy.

Optionally, the fifth policy may be the same as or different from the sixth policy. This is not limited in this application.

For example, to increase the current bit rate of the first service to the target bit rate, the fifth policy may specifically be switching to a high-specification internal processing unit.

It should be noted that the fifth policy may alternatively be performing scheduling based on a priority, providing a higher guaranteed bandwidth for the first service, optimizing quick UDP internet connections (quick UDP internet connections, QUIC), reducing a packet loss rate of the first service, or the like. This is not limited in this application. This application provides descriptions by using an example in which the fifth policy is switching to the high-specification internal processing unit.

Step S524: The PSA-UPF 2 executes the fifth policy.

Step S526: The PSA-UPF 2 sends a session establishment response message (Session Establishment Response) to the SMF. The message includes quintuple information of the SDF of the first service.

Step S528: The SMF generates a QoS rule (QoSRule) by using the quintuple information of the SDF as a TFT, and delivers the QoS rule to the UE, where the QoS rule indicates the UE to establish a QoS flow.

Step S530: The UE initiates a QoS flow establishment procedure according to the delivered QoS rule.

Step S532: Switch transmission of the first service of the UE to a newly established QoS flow.

Step S434: When the UE performs transmission of the first service based on the newly established QoS flow, if the UE perceives that transmission information such as a first packet latency, round trip time, a packet loss rate, a retransmission rate, an out-of-order rate, a latency jitter, a user bandwidth, and memory usage of the first service carried by the network changes, and finds that an SLA requirement on performing transmission of the first service at a high bit rate is already met, the UE performs transmission of data of the first service at the target bit rate.

Specifically, the UE may perform perception by measuring, in real time, the information such as the first packet latency, the round trip time, the packet loss rate, the retransmission rate, the out-of-order rate, the latency jitter, the user bandwidth, and the memory usage of the first service carried by the network.

In addition, the PSA-UPF 1 may continuously report bit rates of various services and SLA information of the various services to the NWDAF, so that the NWDAF can continuously improve the first mapping relationship.

According to the method 500, the bit rate of performing transmission of the first service by the UE can be increased, to quickly fill a pipeline, and implement traffic stimulation.

It should be noted that in embodiments of this application, that the PCF, the SMF, and the UPF assist the NWDAF in increasing the bit rate of performing transmission of the first service by the UE is listed, and another network element may also assist the NWDAF in increasing the bit rate of performing transmission of the first service by the UE. This is not limited in this application.

In addition, in embodiments of this application, the UPF may also report other service information in addition to information such as a bit rate of a service #1, SLA information of the service #1, and a KPI and a KQI of the service #1. This is not limited in this application.

In addition, when the PCF, the SMF, and the UPF separately assist the NWDAF in increasing the bit rate of performing transmission of the first service by the UE, in addition to the first policy, the third policy, and the fifth policy mentioned in this application, another applicable policy may also be used. This is not limited in this application.

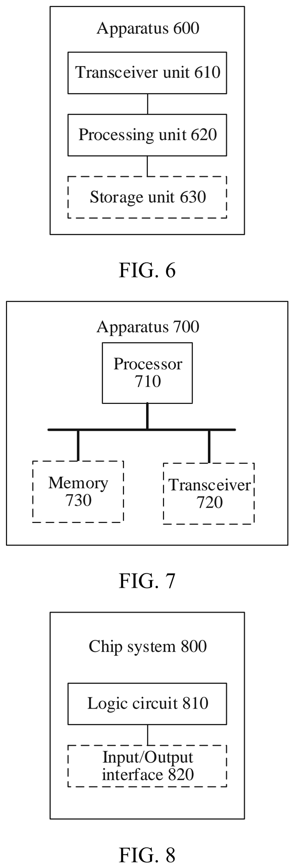

The foregoing describes in detail the methods provided in embodiments of this application with reference to FIG. 2 to FIG. 5. The following describes in detail communication apparatuses provided in embodiments of this application with reference to FIG. 6 to FIG. 8. It should be understood that descriptions of apparatus embodiments correspond to the descriptions of the method embodiments. Therefore, for content that is not described in detail, refer to the method embodiments. For brevity, details are not described herein again.

FIG. 6 is a block diagram of a communication apparatus 600 according to an embodiment of this application. As shown in FIG. 6, the communication apparatus 600 may include a transceiver unit 610 and a processing unit 620.

In a possible design, the communication apparatus 600 may be the first network element in the foregoing method embodiments, or may be a chip that implements the functions of the first network element in the foregoing method embodiments.

It should be understood that the communication apparatus 600 may correspond to the first network element in the method 200 in embodiments of this application, and the communication apparatus 600 may include units configured to perform the method performed by the first network element in the method 200 in embodiments of this application. In addition, the units in the communication apparatus 600 and the foregoing other operations and/or functions are respectively for implementing corresponding procedures of the method 200 in FIG. 2. It should be understood that a specific process in which the units perform the foregoing corresponding steps is already described in detail in the foregoing method embodiments, and for brevity, details are not described herein.

In another possible design, the communication apparatus 600 may be the UPF in the foregoing method embodiments, or may be a chip configured to implement the functions of the UPF in the foregoing method embodiments.

It should be understood that the communication apparatus 600 may correspond to the UPF in the method 300, the method 400, and the method 500 in embodiments of this application, and the communication apparatus 600 may include units configured to perform the methods performed by the UPF in the method 300 in FIG. 3, the method 400 in FIG. 4, and the method 500 in FIG. 5. In addition, the units in the communication apparatus 600 and the foregoing other operations and/or functions are respectively for implementing corresponding procedures of the method 300 in FIG. 3, the method 400 in FIG. 4, and the method 500 in FIG. 5. It should be understood that a process in which the units perform the foregoing corresponding steps is already described in detail in the foregoing method embodiments, and for brevity, details are not described herein.

In another possible design, the communication apparatus 600 may be the PCF in the foregoing method embodiments, or may be a chip configured to implement the functions of the PCF in the foregoing method embodiments.

It should be understood that the communication apparatus 600 may correspond to the PCF in the method 300, the method 400, and the method 500 in embodiments of this application, and the communication apparatus 600 may include units configured to perform the methods performed by the PCF in the method 300 in FIG. 3, the method 400 in FIG. 4, and the method 500 in FIG. 5. In addition, the units in the communication apparatus 600 and the foregoing other operations and/or functions are respectively for implementing corresponding procedures of the method 300 in FIG. 3, the method 400 in FIG. 4, and the method 500 in FIG. 5. It should be understood that a process in which the units perform the foregoing corresponding steps is already described in detail in the foregoing method embodiments, and for brevity, details are not described herein.

In another possible design, the communication apparatus 600 may be the SMF in the foregoing method embodiments, or may be a chip configured to implement the functions of the SMF in the foregoing method embodiments.

It should be understood that the communication apparatus 600 may correspond to the SMF in the method 300, the method 400, and the method 500 in embodiments of this application, and the communication apparatus 1100 may include units configured to perform the methods performed by the SMF in the method 300 in FIG. 3, the method 400 in FIG. 4, and the method 500 in FIG. 5. In addition, the units in the communication apparatus 600 and the foregoing other operations and/or functions are respectively for implementing corresponding procedures of the method 300 in FIG. 3, the method 400 in FIG. 4, and the method 500 in FIG. 5. It should be understood that a process in which the units perform the foregoing corresponding steps is already described in detail in the foregoing method embodiments, and for brevity, details are not described herein.

In another possible design, the communication apparatus 600 may be the NWDAF in the foregoing method embodiments, or may be a chip configured to implement the functions of the NWDAF in the foregoing method embodiments.

It should be understood that the communication apparatus 600 may correspond to the NWDAF in the method 200, the method 300, the method 400, and the method 500 in embodiments of this application, and the communication apparatus 600 may include units configured to perform the methods performed by the NWDAF in the method 200 in FIG. 2, the method 300 in FIG. 3, the method 400 in FIG. 4, and the method 500 in FIG. 5. In addition, the units in the communication apparatus 600 and the foregoing other operations and/or functions are respectively for implementing corresponding procedures of the method 200 in FIG. 2, the method 300 in FIG. 3, the method 400 in FIG. 4, and the method 500 in FIG. 5. It should be understood that a process in which the units perform the foregoing corresponding steps is already described in detail in the foregoing method embodiments, and for brevity, details are not described herein.

It should be further understood that the transceiver unit 610 in the communication apparatus 600 may correspond to a transceiver 720 in a communication device 700 shown in FIG. 7, and the processing unit 720 in the communication apparatus 700 may correspond to a processor 710 in the communication device 700 shown in FIG. 7.

It should be further understood that when the communication apparatus 600 is a chip, the chip includes a transceiver unit. Optionally, the chip may further include a processing unit. The transceiver unit may be an input/output circuit or a communication interface. The processing unit may be a processor, a microprocessor, or an integrated circuit integrated on the chip.

The transceiver unit 610 is configured to implement signal receiving and sending operations of the communication apparatus 600, and the processing unit 620 is configured to implement a signal processing operation of the communication apparatus 600. Optionally, the transceiver unit 610 forms an obtaining unit, or the transceiver unit 610 may be referred to as an obtaining unit. Optionally, the transceiver unit 610 and the processing unit 620 form an obtaining unit.

Optionally, the communication apparatus 600 further includes a storage unit 630, and the storage unit 630 is configured to store instructions.

FIG. 7 is a block diagram of an apparatus 700 according to an embodiment of this application. As shown in FIG. 7, the apparatus 700 includes at least one processor 710. The processor 710 is coupled to a memory 730, and is configured to execute instructions stored in the memory 730, to perform the methods in FIG. 2, FIG. 3, FIG. 4, and FIG. 5. Optionally, the apparatus 700 further includes a transceiver 720. The processor 710 is coupled to the memory 730, and is configured to execute the instructions stored in the memory, to control the transceiver 720 to send a signal and/or receive a signal. For example, the processor 710 may control the transceiver 720 to send first information and/or receive first information. Optionally, the communication apparatus 700 further includes the memory 730, configured to store the instructions.

It should be understood that the processor 710 and the memory 730 may be combined into one processing apparatus, and the processor 710 is configured to execute program code stored in the memory 730 to implement the foregoing functions. In specific implementation, the memory 730 may alternatively be integrated into the processor 710, or be independent of the processor 710.

It should be further understood that the transceiver 720 may include a receiver (or referred to as a receiver machine) and a transmitter (or referred to as a transmitter machine). The transceiver 720 may further include one or more antennas. The transceiver 720 may alternatively be a communication interface or an interface circuit.

When the apparatus 700 is a chip, the chip includes a transceiver unit and a processing unit. The transceiver unit may be an input/output circuit or a communication interface. The processing unit may be a processor, a microprocessor, or an integrated circuit integrated on the chip.

FIG. 8 is a diagram of a chip system according to an embodiment of this application. The chip system herein may also be a system including a circuit. The chip system 800 shown in FIG. 8 includes a logic circuit 810 and an input/output interface (input/output interface) 820. The logic circuit is configured to couple to an input interface, and perform transmission of information (for example, first information) through the input/output interface, to perform the methods in FIG. 2, FIG. 3, FIG. 4, and FIG. 5.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. A software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the methods provided in embodiments of this application, this application further provides a computer program product. The computer program product includes computer program code. When the computer program code is run on a computer, the computer is enabled to perform the methods in embodiments shown in FIG. 2, FIG. 3, FIG. 4, and FIG. 5.

According to the methods provided in embodiments of this application, this application further provides a computer-readable medium. The computer-readable medium stores program code. When the program code is run on a computer, the computer is enabled to perform the methods in embodiments shown in FIG. 2, FIG. 3, FIG. 4, and FIG. 5.

According to the methods provided in embodiments of this application, this application further provides a system. The system includes the foregoing first network element and data analysis network element. Optionally, the system further includes the foregoing session management network element, policy control network element, user plane network element, and the like.

All or some of the foregoing embodiments may be implemented by software, hardware, firmware, or any combination thereof. When the software is used for implementation, all or some of the embodiments may be implemented in a form of a computer program product. The computer program product includes one or more computer instructions. When the computer instructions are loaded and executed on the computer, the procedures or functions according to embodiments of this application are all or partially generated. The computer instructions may be stored in a computer-readable storage medium, or may be transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid state disk, SSD)), or the like.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining a first mapping relationship, wherein the first mapping relationship indicates a correspondence between a plurality of bit rates and a plurality of pieces of service level agreement SLA information;
determining, based on a target bit rate of a first service, target SLA information corresponding to the target bit rate from the first mapping relationship, wherein the target bit rate of the first service is greater than a current bit rate of the first service; and
sending first information, wherein the first information indicates the target SLA information.

2. The method according to claim 1, wherein the target SLA information comprises at least one of the following information:
an average latency of transmission of the first service, a peak latency of transmission of the first service, a latency jitter of transmission of the first service, a first packet response latency of transmission of the first service, an average transmission bandwidth of the first service, a peak transmission bandwidth of the first service, a 5G quality of service identifier 5QI of the first service, a quality of service class identifier QCI of the first service, a priority of a service data flow SDF of the first service, a guaranteed bit rate GBR of the SDF of the first service, a maximum bit rate MBR of the SDF of the first service, and a packet error loss rate PELR of the first service.

3. The method according to claim 1 or 2, wherein the first mapping relationship further indicates a correspondence between the plurality of bit rates, and a plurality of key performance indicators KPIs and the plurality of pieces of SLA information, and the KPI comprises at least one of the following information:
a first packet latency, round trip time RTT, a packet loss rate, a retransmission rate, an out-of-order rate, and a latency jitter.

4. The method according to claim 3, wherein the first mapping relationship further indicates a correspondence between the plurality of bit rates, and the plurality of KPIs, a plurality of key quality indicators KQIs, and the plurality of pieces of SLA information, and the KQI comprises at least one of the following information:
a resolution, a frame rate, a buffer latency, a quantity of short video headers, a hypertext transfer protocol HTTP response latency, and a freezing ratio.

5. The method according to claim 4, wherein obtaining the first mapping relationship comprises:
receiving a plurality of pieces of service access information of a plurality of services, wherein each of the plurality of pieces of service access information comprises at least one of SLA information, a KPI, and a KQI of a service, and the plurality of services and the plurality of pieces of service access information are in one-to-one correspondence; and
determining the first mapping relationship based on the plurality of pieces of service access information, wherein each of the plurality of bit rates is determined based on the KPI;
or
receiving a plurality of pieces of service access information of a plurality of services, wherein each of the plurality of pieces of service access information comprises at least one of a bit rate, SLA information, a KPI, and a KQI of a service, and the plurality of services and the plurality of pieces of service access information are in one-to-one correspondence; and
determining the first mapping relationship based on the plurality of pieces of service access information.

6. The method according to any one of claims 1 to 5, wherein sending the first information comprises:
receiving second information, wherein the second information comprises a first event identifier, and the first event identifier identifies a bit rate increase event of the first service; and
sending the first information to a first network element based on the second information, wherein the first information is for determining a first policy for increasing the current bit rate of the first service to the target bit rate.

7. The method according to claim 6, wherein the second information further comprises at least one of an identifier of a first terminal device and an identifier of the first service.

8. The method according to claim 6 or 7, wherein the first information further comprises at least one of the first event identifier, the identifier of the first terminal device, the identifier of the first service, traffic flow template TFT information corresponding to the SDF of the first service, and a second policy, wherein the second policy is for determining the first policy for increasing the current bit rate of the first service to the target bit rate.

9. The method according to any one of claims 6 to 8, wherein the first network element is any one of a policy control function PCF network element, a session management function SMF network element, and a user plane function UPF network element.

10. A communication method, wherein the method comprises:
receiving, by a first network element, first information, wherein the first information indicates target service level agreement SLA information corresponding to a target bit rate of a first service, the target SLA information is determined from a first mapping relationship, and the first mapping relationship indicates a correspondence between a plurality of bit rates and a plurality of pieces of SLA information; and
determining, by the first network element, a first policy based on the first information, wherein the first policy is for increasing a current bit rate of the first service to the target bit rate.

11. The method according to claim 10, wherein the target SLA information comprises at least one of the following information:
an average latency of transmission of the first service, a peak latency of transmission of the first service, a latency jitter of transmission of the first service, a first packet response latency of transmission of the first service, an average transmission bandwidth of the first service, a peak transmission bandwidth of the first service, a 5G quality of service identifier 5QI of the first service, a quality of service class identifier QCI of the first service, a priority of a service data flow SDF of the first service, a guaranteed bit rate GBR of the SDF of the first service, a maximum bit rate MBR of the SDF of the first service, and a packet error loss rate PELR of the first service.

12. The method according to claim 10 or 11, wherein the first mapping relationship further indicates a correspondence between the plurality of bit rates, and a plurality of key performance indicators KPIs and the plurality of pieces of SLA information, and the KPI comprises at least one of the following information:
a first packet latency, round trip time RTT, a packet loss rate, a retransmission rate, an out-of-order rate, and a latency jitter.

13. The method according to claim 12, wherein the first mapping relationship further indicates a correspondence between the plurality of bit rates, and the plurality of KPIs, a plurality of key quality indicators KQIs, and the plurality of pieces of SLA information, and the KQI comprises at least one of the following information:
a resolution, a frame rate, a buffer latency, a quantity of short video headers, a hypertext transfer protocol HTTP response latency, and a freezing ratio.

14. The method according to any one of claims 10 to 13, wherein receiving, by the first network element, the first information comprises:
sending, by the first network element, second information, wherein the second information comprises a first event identifier, and the first event identifier identifies a bit rate increase event of the first service; and
receiving, by the first network element, the first information based on the second information.

15. The method according to claim 14, wherein the second information further comprises at least one of an identifier of a first terminal device and an identifier of the first service.

16. The method according to claim 14 or 15, wherein the first information further comprises at least one of the first event identifier, the identifier of the first terminal device, the identifier of the first service, traffic flow template TFT information corresponding to the SDF of the first service, and a second policy, wherein the second policy is for determining the first policy.

17. The method according to any one of claims 10 to 16, wherein the first network element is any one of a policy control function PCF network element, a session management function SMF network element, and a user plane function UPF network element.

18. A communication apparatus, wherein the communication apparatus comprises:
a transceiver unit, configured to obtain a first mapping relationship, wherein the first mapping relationship indicates a correspondence between a plurality of bit rates and a plurality of pieces of service level agreement SLA information; and
a processing unit, configured to determine, based on a target bit rate of a first service, target SLA information corresponding to the target bit rate from the first mapping relationship, wherein the target bit rate of the first service is greater than a current bit rate of the first service, wherein
the transceiver unit is further configured to send first information, wherein the first information indicates the target SLA information.

19. The apparatus according to claim 18, wherein the target SLA information comprises at least one of the following information:
an average latency of transmission of the first service, a peak latency of transmission of the first service, a latency jitter of transmission of the first service, a first packet response latency of transmission of the first service, an average transmission bandwidth of the first service, a peak transmission bandwidth of the first service, a 5G quality of service identifier 5QI of the first service, a quality of service class identifier QCI of the first service, a priority of a service data flow SDF of the first service, a guaranteed bit rate GBR of the SDF of the first service, a maximum bit rate MBR of the SDF of the first service, and a packet error loss rate PELR of the first service.

20. The apparatus according to claim 18 or 19, wherein the first mapping relationship further indicates a correspondence between the plurality of bit rates, and a plurality of key performance indicators KPIs and the plurality of pieces of SLA information, and the KPI comprises at least one of the following information:
a first packet latency, round trip time RTT, a packet loss rate, a retransmission rate, an out-of-order rate, and a latency jitter.

21. The apparatus according to claim 20, wherein the first mapping relationship further indicates a correspondence between the plurality of bit rates, and the plurality of KPIs, a plurality of key quality indicators KQIs, and the plurality of pieces of SLA information, and the KQI comprises at least one of the following information:
a resolution, a frame rate, a buffer latency, a quantity of short video headers, a hypertext transfer protocol HTTP response latency, and a freezing ratio.

22. The apparatus according to claim 21, wherein that the transceiver unit is configured to obtain the first mapping relationship comprises:
the transceiver unit is configured to receive a plurality of pieces of service access information of a plurality of services, wherein each of the plurality of pieces of service access information comprises at least one of SLA information, a KPI, and a KQI of a service, and the plurality of services and the plurality of pieces of service access information are in one-to-one correspondence; and
the processing unit is configured to determine the first mapping relationship based on the plurality of pieces of service access information, wherein each of the plurality of bit rates is determined based on the KPI;
or
the transceiver unit is configured to receive a plurality of pieces of service access information of a plurality of services, wherein each of the plurality of pieces of service access information comprises at least one of a bit rate, SLA information, a KPI, and a KQI of a service, and the plurality of services and the plurality of pieces of service access information are in one-to-one correspondence; and
the processing unit is configured to determine the first mapping relationship based on the plurality of pieces of service access information.

23. The apparatus according to any one of claims 18 to 22, wherein that the transceiver unit is configured to send the first information comprises:
the transceiver unit is configured to receive second information, wherein the second information comprises a first event identifier, and the first event identifier identifies a bit rate increase event of the first service; and
the transceiver unit is configured to send the first information to a first network element based on the second information, wherein the first information is for determining a first policy for increasing the current bit rate of the first service to the target bit rate.

24. A communication apparatus, wherein the communication apparatus comprises:
a transceiver unit, configured to receive first information, wherein the first information indicates target service level agreement SLA information corresponding to a target bit rate of a first service, the target SLA information is determined from a first mapping relationship, and the first mapping relationship indicates a correspondence between a plurality of bit rates and a plurality of pieces of SLA information; and
a processing unit, configured to determine a first policy based on the first information, wherein the first policy is for increasing a current bit rate of the first service to the target bit rate.

25. The apparatus according to claim 24, wherein the target SLA information comprises at least one of the following information:
an average latency of transmission of the first service, a peak latency of transmission of the first service, a latency jitter of transmission of the first service, a first packet response latency of transmission of the first service, an average transmission bandwidth of the first service, a peak transmission bandwidth of the first service, a 5G quality of service identifier 5QI of the first service, a quality of service class identifier QCI of the first service, a priority of a service data flow SDF of the first service, a guaranteed bit rate GBR of the SDF of the first service, a maximum bit rate MBR of the SDF of the first service, and a packet error loss rate PELR of the first service.

26. The apparatus according to claim 24 or 25, wherein the first mapping relationship further indicates a correspondence between the plurality of bit rates, and a plurality of key performance indicators KPIs and the plurality of pieces of SLA information, and the KPI comprises at least one of the following information:
a first packet latency, round trip time RTT, a packet loss rate, a retransmission rate, an out-of-order rate, and a latency jitter.

27. The apparatus according to claim 26, wherein the first mapping relationship further indicates a correspondence between the plurality of bit rates, and the plurality of KPIs, a plurality of key quality indicators KQIs, and the plurality of pieces of SLA information, and the KQI comprises at least one of the following information:
a resolution, a frame rate, a buffer latency, a quantity of short video headers, a hypertext transfer protocol HTTP response latency, and a freezing ratio.

28. The apparatus according to any one of claims 24 to 27, wherein that the transceiver unit is configured to receive the first information comprises:
the transceiver unit is configured to send second information, wherein the second information comprises a first event identifier, and the first event identifier identifies a bit rate increase event of the first service; and
the transceiver unit is configured to receive the first information based on the second information.

29. A communication apparatus, comprising at least one processor, wherein the at least one processor is configured to couple to a memory, and read and execute instructions in the memory, to implement the method according to any one of claims 1 to 9, or implement the method according to any one of claims 10 to 17.

30. A computer-readable storage medium, wherein the computer-readable storage medium stores a computer program, and when the computer program is executed, the method according to any one of claims 1 to 9 is performed, or the method according to any one of claims 10 to 17 is performed.

31. A computer program product comprising instructions, wherein when the computer program product runs on a computer, the computer is enabled to perform the method according to any one of claims 1 to 9 or perform the method according to any one of claims 10 to 17.

32. A communication system, wherein the system comprises a data analysis network element and a first network element, the data analysis network element is configured to perform the method according to any one of claims 1 to 9, and the first network element is configured to perform the method according to any one of claims 10 to 17.
